(19) **Europäisches Patentamt**
**European Patent Office**
**Office européen des brevets**

(11) **EP 2 846 492 A1**

(12) **EUROPEAN PATENT APPLICATION**

(43) Date of publication:
**11.03.2015 Bulletin 2015/11**

(51) Int Cl.:
*H04L 9/08* (2006.01)   *H04L 9/30* (2006.01)
*H04L 9/32* (2006.01)

(21) Application number: **13306217.4**

(22) Date of filing: **05.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Joye, Marc**
 **35576 Cesson Sévigné (FR)**
• **Libert, Benoît**
 **35576 Cesson-Sévigné (FR)**

(74) Representative: **Huchet, Anne et al**
 **Technicolor**
 **1, rue Jeanne d'Arc**
 **92443 Issy-les-Moulineaux Cedex (FR)**

(54) **Cryptographic group signature methods and devices**

(57)   To generate a group signature on a message, a processor (122) generates a two-level signature on an identity of the group member at the first level and the message at the second level; generates a commitment to the identity of the group member, commitments to each group element and a proof that the identity and the group elements satisfy a predetermined equation; encodes the identity of the group member in the group signature in a bit-wise manner using an identity-based encryption scheme where the message serves as the identity of the identity-based encryption scheme to produce a ciphertext; generates a first proof that the ciphertext encrypts the identity of the group member; generates a second proof that the encoded identity is an identity of a group member in a certificate signed by a group manager and that the certificate was used to generate the signature on the message at the second level; and outputs the group signature comprising the two-level signature, the commitments, the encoded identity of the group member and the proofs

Figure 1

**Description**

TECHNICAL FIELD

The present invention relates generally to cryptography, and in particular to group signatures.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Group signatures

Group signatures, introduced at EUROCRYPT 1991 by David Chaum and Eugène van Heyst in "Group Signatures", allow members of a group to sign messages anonymously on behalf of the whole group. The group is controlled by a group manager who handles the enrolment of the group members, and who has the ability to open a group signature generated by a member of its group in order to determine who generated this group signature.

Group signatures are useful in contexts where it is desirable to preserve the signer's anonymity with the possibility to retrieve, by some authority, the signer's identity, for example in case of abuse. An illustrative example are employees equipped with badges that open the doors to certain protected areas. The badges use group signatures to prove the right to enter the protected areas, but a log of entries does not show who entered at what time (as legal reasons may preclude this). However, it should still be possible, e.g. in case of theft, to find out the identity of a signing group member.

A group signature with message-dependent opening (GS-MDO) is a group signature where an opening authority (OA) should not be able to open all messages by itself. To do this, the OA needs the cooperation of another authority, called admitter, that generates a trapdoor $t_M$ associated with the message $M$. In order to identity the author of a signature, the OA has to use *both* its private key and the trapdoor $t_M$. Formally, a GS-MDO scheme is a tuple (Keygen, Sign, Verify, TrapGen, Open) of efficient algorithms with the following specification:

> **Keygen ($\lambda$, N):** given a security parameter $\lambda \in$ N and a maximal number of group members $N \in \mathbb{N}$, this randomized algorithm outputs a group public key gpk, a vector **gsk** = (gsk[0],..., gsk[N-1]) of group members' private keys as well as private keys $msk_{ADM}$ and ok for the admitter and the opening authority, respectively.

> **Sign:** takes as input a message $M$, a private key gsk[$i$] and the group public key gpk. It outputs a signature $\sigma$.

> **erify:** is a deterministic algorithm taking as input a signature $\sigma$, a message $M$ and a group public key gpk. It returns either 1 or 0 depending on whether or not the signature is successfully verified or not.

> **TrapGen:** is a possibly randomized algorithm that takes as input the admitter's private key $msk_{ADM}$ and outputs a trapdoor $t_M$ allowing the OA to open all signatures on the message $M$.

> **Open:** takes as input a message $M$, a valid signature $\sigma$ with regard to gpk, the opening authority's private key ok and a trapdoor $t_M$ for the message $M$. It outputs $i \in \{0,..., N - 1\} \cup \{\perp\}$, which is either the index of a group member or a symbol indicating an opening failure.

Sakai et al. considered [see Y. Sakai, K. Emura, G. Hanaoka, Y. Kawai, T. Matsuda, and K. Omote. Group Signatures with Message-Dependent Opening. In 5th International Conference on Pairing-Based Cryptography (Pairing 2012), Lecture Notes on Computer Science series, Springer, 2013.] three security properties in a model that can be seen as an extension of the Bellare-Micciancio-Warinschi [M. Bellare, D. Micciancio, B. Warinschi. Foundations of group signatures: Formal definitions, simplified requirements, and a construction based on general assumptions. In Eurocrypt'03, Lecture Notes on Computer Science 2656, pp. 614-629, 2003.]. The first one, called full traceability, captures that no coalition of dishonest group members should be able to create a non-trivial signature that cannot be traced to one of them. This should remain true even if the adversary can invoke an oracle that returns signatures on behalf of honest group members.

**Definition** 1. A GS-MDO scheme provides full traceability if, for any $\lambda \in$ N, any N $\in$ poly($\lambda$) and any Probabilistic Polynomial Time (PPT) adversary A involved in the experiment hereafter, it holds that the advantage for the adversary A

$$\mathbf{Adv}_A^{\mathrm{trace}}(\lambda) = \Pr[\mathbf{Exp}_A^{\mathrm{trace}}(\lambda, N) = 1] \in \mathrm{negl}(\lambda)$$

is a negligible function in the security parameter if the experiment $\mathbf{Exp}_A^{\mathrm{trace}}(\lambda, N)$ proceeds as follows, where C denotes a dynamically growing set of corrupted users.

$(\text{gpk, ok, msk}_{\text{ADM}}, \textbf{gsk}) \leftarrow \text{Keygen}(\lambda, N)$

$\text{st} \leftarrow (\text{ok, msk}_{\text{ADM}}, \text{gpk})$

$C \leftarrow \varnothing$ ; $K \leftarrow \varepsilon$ ; *Cont* $\leftarrow$ true

while (*Cont* = true) do

    $(\textit{Cont}, \text{st}, j) \leftarrow A^{\text{Sign}(\text{gsk}[\cdot], \cdot)}(\text{st}, K)$

    if *Cont* = true then $C \leftarrow C \cup \{j\}$ ; $K \leftarrow \text{gsk}[j]$ end if

end while

$(M^*, \sigma^*) \leftarrow A^{\text{Sign}(\text{gsk}[\cdot], \cdot)}(\text{guess}; \text{st})$

if Verify(gpk, $M^*$, $\sigma^*$) = 0 then Return 0

if Open(gpk, TrapGen(gpk, msk$_{\text{ADM}}$, $M^*$), $M^*$, $\sigma^*$, , ok) = $\perp$ then Return 1

if $\exists j^* \in \{1, \ldots, N\}$ such that

    $(j^*=\text{Open}(\text{gpk}, M^*, \sigma^*, t_{M^*}, \text{ok}) \wedge (j^* \notin C) \wedge ((j^*, M^*)$ was not queried to

    the Sign(gsk[.],.) oracle ) with $t_{M^*} \leftarrow \text{TrapGen}(\text{gpk}, \text{msk}_{\text{ADM}}, M^*)$

then Return 1

else Return 0

In a GS-MDO scheme, neither the OA or the admitter should be able to identify the author of a signature alone. First, the notion of anonymity against the admitter captures that, without the private key of the OA, the admitter is unable to distinguish signatures created by two distinct group members. This remains true even if the admitter has access to the private keys of all group members and to an oracle that opens adversarially-chosen signatures (as long as these differ from the challenge signature $\sigma^*$).

**Definition 2.** A GS-MDO scheme provides full anonymity against the admitter if, for any $\lambda \in \mathbb{N}$, any $N \in \mathrm{poly}(\lambda)$ and any Probabilistic Polynomial Time (PPT) adversary A, the function

$$\mathbf{Adv}_A^{\mathrm{anon-adm}}(\lambda) = \Pr\big[\mathbf{Exp}_A^{\mathrm{anon-adm}}(\lambda, N) = 1\big] \in \mathrm{negl}(\lambda)$$

is a negligible function in the security parameter if the experiment $\mathbf{Exp}_A^{\mathrm{anon-adm}}(\lambda, N)$ proceeds as follows

$(\text{gpk, ok, msk}_{\text{ADM}}, \textbf{gsk}) \leftarrow \text{Keygen}(\lambda, N)$

$(\text{st}, j_0, j_1, M^*) \leftarrow A^{\text{Oracle-ok}}(\text{gpk}, \textbf{gsk}, \text{msk}_{\text{ADM}})$

$\sigma^* \leftarrow \text{Sign}(\text{gpk}, \text{gsk}[j_b], M^*)$

$b' \leftarrow A^{\text{Oracle-ok}}(\text{st}, \sigma^*)$

Return 1 if $b' = b$

In the above, Oracle-ok denotes an oracle that takes as input any adversarially chosen signature $\sigma \neq \sigma^*$ and

uses ok and msk$_{ADM}$ to determine and return the identity of the signer.

The notion of anonymity against the opener models the inability of the OA to open signatures without having obtained an appropriate message-related trapdoor from the admitter. Formally, the adversary has access to the OA's private key as well as the private keys of all group members and to an oracle returning trapdoors for arbitrary messages as long as they differ from the message of the challenge signature σ*.

**Definition 3.** A GS-MDO scheme provides full anonymity against the opener if, for any $\lambda \in \mathbb{N}$, any $N \in$ poly($\lambda$) and any Probabilistic Polynomial Time (PPT) adversary A, the function

$$\mathbf{Adv}_A^{\mathrm{anon-oa}}(\lambda) = \Pr[\mathbf{Exp}_A^{\mathrm{anon-oa}}(\lambda, N) = 1] \in \mathrm{negl}(\lambda)$$

is a negligible function in the security parameter if the experiment $\mathbf{Exp}_A^{\mathrm{anon-oa}}(\lambda, N)$ goes as follows

(gpk, ok, msk$_{ADM}$, **gsk**) ← Keygen($\lambda$,$N$)

(St, $j_0$, $j_1$, M*) ← A$^{\mathrm{Oracle\text{-}ADM}}$(gpk, **gsk**, ok)

σ* ← Sign(gpk, gsk[$j_b$], M*)

b' ← A$^{\mathrm{oracle\text{-}ADM}}$(st, σ*)

Return 1 if b' = b

In the above notation, Oracle-ADM is an oracle that returns trapdoors for arbitrary messages $M \neq M^*$ chosen by the adversary.

The first practical and collusion-resistant group signature was given by Ateniese et al. [G. Ateniese, J. Camenisch, M. Joye, G. Tsudik. A practical and provably secure coalition-resistant group signature scheme. In Crypto'00, Lecture Notes in Computer Science 1880, pp. 255-270, 2000.] while schemes with short signatures were presented by Boneh et al. [D. Boneh, X. Boyen, H. Shacham. Short Group Signatures. In Crypto'04, Lecture Notes in Computer Science 3152, pp. 41-55. Springer, 2004.].

Simplified security models for group signatures were put forth in various papers [see for example M. Bellare, D. Micciancio, B. Warinschi. Foundations of group signatures: Formal definitions, simplified requirements, and a construction based on general assumptions. In Eurocrypt'03, Lecture Notes in Computer Science 2656, pp. 614-629, 2003. M. Bellare, H. Shi, C. Zhang. Foundations of group signatures: The case of dynamic groups. In CT-RSA'05, Lecture Notes in Computer Science 3376, pp. 136-153, 2005. A. Kiayias, M. Yung. Secure scalable group signature with dynamic joins and separable authorities. International Journal of Security and Networks (IJSN) Vol. 1, No. 1/2, pp. 24-45, 2006. Earlier version appeared as Cryptology ePrint Archive: Report 2004/076, 2004.]

Group signatures with security proofs in the standard model are described different publications [see for example G. Ateniese, J. Camenisch, S. Hohenberger, B. de Medeiros. Practical group signatures without random oracles. Cryptology ePrint Archive: Report 2005/385, 2005. X. Boyen, B. Waters. Compact Group Signatures Without Random Oracles. In Eurocrypt'06, Lecture Notes in Computer Science 4004, pp. 427-444, Springer, 2006. X. Boyen, B. Waters. Full-Domain Subgroup Hiding and Constant-Size Group Signatures. In PKC'07, Lecture Notes in Computer Science 4450, pp. 1-15, 2007. J. Groth. Simulation-Sound NIZK Proofs for a Practical Language and Constant Size Group Signatures. In Asiacrypt'06, Lecture Notes in Computer Science 4284, pp. 444-459, Springer, 2006. J. Groth. Fully anonymous group signatures without random oracles. In Asiacrypt 2007, Lecture Notes in Computer Science 4833, pp. 164-180. Springer, 2007.]

However, the problem of restricting the power of the opening authority was only considered very recently by Sakai et al. [already mentioned].

The primitive called "group signature with message-dependent opening" was suggested for the first time by Sakai et al., where a theoretical (inefficient) construction was described. Sakai et al. also suggested a relatively efficient construction based on specific assumptions and an Identity-Based Encryption (IBE) scheme described by Heng et al. [S.-H. Heng, K. Kurosawa. k-Resilient Identity-Based Encryption in the Standard Model. In CT-RSA'04, Lecture Notes in Computer Science 2964, pp. 67-80, 2004.]. However, this concrete construction only provides a weak flavor of anonymity against the opening authority (cf. Definition 3). Specifically, it only achieves anonymity against the opener as long as the adversary does not obtain more than a pre-determined number d of message-specific tokens. Moreover, the public key has size O(d).

In the general construction of Sakai et al., the signing algorithm proceeds by choosing two random session keys $K^{PKE}$ and $K^{IBE}$ which are separately encrypted using a CCA2-secure public-key encryption scheme and an IBE scheme, respectively. These two keys $K^{PKE}$ and $K^{IBE}$ are then used to hide the group member's credential in the fashion of multiple encryptions while adding a proof that the hidden value is a valid and properly encrypted credential.

Identity-based encryption (IBE)

As the invention makes use of identity-based encryption (IBE), some background information on this will now be presented.

**Definition 4** [see further A. Shamir. Identity-Based Cryptosystems and Signature Schemes. In Crypto'84, Lecture Notes on Computer Science 196, pp. 47-53, 1984. and D. Boneh and M. Franklin. Identity-Based Encryption from the Weil Pairing. In SIAM Journal of Computing 32(3), pp. 586-615, 2003, earlier version in Crypto'01, Lecture Notes on Computer Science 2139, pp. 213-229, 2001.] An Identity-Based Encryption scheme (IBE) is a tuple (Setup, Keygen, Encrypt, Decrypt) of probabilistic polynomial-time algorithms (PPT) such that:

- Setup takes as input a security parameter $\lambda \in$ N and outputs a master public key mpk and a matching master secret key msk.
- Keygen takes as input an identity ID and a master secret key msk. It outputs a private key $d_{ID}$ for the identity ID.
- Encrypt takes as input the master public key mpk, an identity ID and a message $M$ and outputs a ciphertext $C$.
- Decrypt takes as input the master public key mpk, a decryption key $d_{ID}$ and a ciphertext C and outputs a message $M$.

Correctness requires that, for any $\lambda \in$ N, any outputs (mpk, msk) of Setup($\lambda$), any plaintext $M$ and any identity ID, whenever $d_{ID} \leftarrow$ Keygen(msk, ID), then

Decrypt(mpk, $d_{ID}$, Encrypt(mpk, ID, $M$)) = $M$.

**Definition 5** [see further Boneh and Franklin] An IBE system is semantically secure (or IND-ID-CPA secure) if no PPT adversary A has non-negligible advantage in this game:

1. The challenger generates a master key pair (mpk, msk) $\leftarrow$ Setup($\lambda$) and gives mpk to A.
2. A issues a number of key extraction queries for identities ID of its choice. The challenger responds with $d_{ID} \leftarrow$ Keygen(msk, ID).
3. When the adversary A decides that phase 2 is over, it chooses distinct equal-length messages $M_0$, $M_1$ and an identity ID* that has never been queried to the key extraction oracle at step 2. The challenger flips a coin $d \xleftarrow{R} \{0,1\}$ and returns a challenge ciphertext $C^*$ = Encrypt(mpk, ID, $M_d^*$).
4. A issues new queries but cannot ask for the private key of ID*.
5. A finally outputs a bit $d' \in \{0,1\}$ and wins if $d' = d$. A's advantage is defined as the distance Adv $^{\text{ind-id-cpa}}(A)$ := $|P_r[d' = d] - 1/2|$.

Waters [see B. Waters. Efficient Identity-Based Encryption Without Random Oracles. In Eurocrypt'05, Lecture Notes on Computer Science 3494, pp. 114-127, 2005.] described the following IBE scheme that allows encrypting any message in $\mathbb{G}_T$.

**Setup**($\lambda$): Choose bilinear groups (G, $G_T$) of prime order p > $2^\lambda$. Then:

1. Choose $\alpha \xleftarrow{R} \mathbb{Z}_p$, $g \xleftarrow{R} \mathbb{G}$, $g_2 \xleftarrow{R} \mathbb{G}$ and set $g_1 = g^\alpha$.

2. Choose $u_0$, $u_1$, ..., $u_L \xleftarrow{R} \mathbb{G}$, for some L $\in$ poly($\lambda$). These will be used to implement a number-theoretic hash function $H_G$: $\{0,1\}^L \to$ G such that any L-bit string

$\tau = \tau[1] ... \tau[L] \in \{0,1\}^L$ is mapped to the value $H_U(\tau) = u_0 \cdot \prod_{i=1}^{L} u_i^{\tau[i]}$.

The master public key is defined as

$$\text{mpk} = \left( (\mathbb{G}, \mathbb{G}_T), p, g, g_1 = g^\alpha, g_2, \{u_i\}_{i=0}^L \right)$$

and the master secret key is $\text{msk} := g_2^\alpha$.

**Keygen**(msk, ID): given the master secret key $\text{msk} = g_2^\alpha$ and an identity ID $\in \{0,1\}^L$, compute and return

$$d_{\mathrm{ID}} = (d_1, d_2) = (g_2^{\alpha} \cdot H_U(\mathrm{ID})^r, g^r), \text{ with } r \xleftarrow{R} \mathbb{Z}_p.$$

**Encrypt**(mpk, ID, *M*): to encrypt a message M ∈ G_T, choose $s \xleftarrow{R} \mathbb{Z}_p$ and compute $C_1 = g^s$ $C_2 = H_U(\mathrm{ID})^s$ $C_0 = M \cdot e(g_1, g_2)^s$.

Return the ciphertext $C = (C_0, C_1, C_2) \in \mathbb{G}_T \times \mathbb{G}^2$.

**Decrypt**(mpk, $d_{\mathrm{ID}}$, *C*): parse the ciphertext *C* as $C = (C_0, C_1, C_2)$. Compute and return $M = C_0 \cdot e(C_2, d_2)/e(C_1, d_1)$.

Waters' IBE is known to be IND-ID-CPA secure assuming that the Decision Bilinear Diffie-Hellman (DBDH) problem is hard. Moreover, a private key $d_{\mathrm{ID}}$ can be seen as a signature on the message ID. Each signature $(S_1, S_2)$ satisfies $e(S_1, g) = e(g_1, g_2) \cdot e(H_U(\mathrm{ID}), S_2)$.

In some cases, the description of the scheme can be simplified by replacing public elements $(g_1, g_2) \in$ G² by $e(g, g)^{\omega} = e(g_1, g_2)$, so that the private key becomes $g^{\omega}$.

In the following, a two-level hierarchical extension of Waters signatures will be used. Specifically, the public key contains the description of two distinct number theoretic hash functions $H_U : \{0,1\}^{L_1} \to \mathbb{G}$ and $H_V : \{0,1\}^{L_2} \to \mathbb{G}$. A signature on a two-block mesage $(M_1, M_2)$ consists of $(S_1, S_2, S_3) = (g^{\omega} \cdot H_U(M_1)^r \cdot H_V(M_2)^s, g^r, g^s)$ and satisfies the verification equation

$$e(S_1, g) = e(g, g)^{\omega} \cdot e(H_U(M_1), S_2) \cdot e(H_V(M_2), S_3).$$

<u>Groth-Sahai proof systems</u>

Groth and Sahai have described efficient non-interactive proof systems allowing a prover to convince a verifier that committed group elements satisfy certain algebraic relations [see J. Groth, A. Sahai. Efficient non-interactive proof systems for bilinear groups. In Eurocrypt'08, Lecture Notes in Computer Science 4965, pp. 415-432, 2008.]. These non-interactive proofs are said witness indistinguishable (WI) because, if several sets of committed variables (called witnesses) satisfy the proved relation, the proof does not reveal any information about which specific witnesses were used by the prover.

The Groth-Sahai non-interative witness indistinguishable (NIWI) proof systems can be based on the Decision Linear Problem (DLIN) assumption. In this case, they use prime order groups and a common reference string (CRS, i.e. a set of common public parameters that are trusted to have the appropriate distribution; it is produced by some trusted party and used by both the prover and the verifier) consisting of three vectors $\vec{f_1}, \vec{f_2}, \vec{f_3} \in \mathbb{G}^3$, where $\vec{f_1} = (f_1, 1, g)$ and $\vec{f_2} = (1, f_2, g)$ for some $f_1, f_2, g \in$ G. To commit to a group element $X \in$ G, the prover chooses $r, s, t \xleftarrow{R} \mathbb{Z}_p^*$ and computes $\vec{C} = (1, 1, X) \cdot \vec{f_1}^r \cdot \vec{f_2}^s \cdot \vec{f_3}^t$. On a perfectly sound CRS, $\vec{f_3} = \vec{f_1}^{\xi_1} \cdot \vec{f_2}^{\xi_2}$, where $\xi_1, \xi_2 \in \mathbb{Z}_p^*$. Commitments $\vec{C} = \left( f_1^{r+\xi_1 t}, f_2^{s+\xi_2 t}, X \cdot g^{r+s+t(\xi_1+\xi_2)} \right)$ are extractable commitments whose distribution is that of Boneh-Boyen-Shacham (BBS) ciphertexts [see D. Boneh, X. Boyen, H. Shacham. Short Group Signatures. In Crypto'04, Lecture Notes in Computer Science 3152, pp. 41-55. Springer, 2004.]: committed values can be extracted using $\beta_1 = \log_g(f_1), \beta_2 = \log_g(f_2)$. In the witness indistinguishability (WI) setting, vector $\vec{f_3}$ is chosen outside the span of $(\vec{f_1}, \vec{f_2})$, so that $\vec{C}$ is a perfectly hiding commitment. Under the DLIN assumption, the two kinds of CRS are computationally indistinguishable.

To commit to an exponent $x \in \mathbb{Z}_p$, one computes $\vec{C} = \vec{\varphi}^x \cdot \vec{f_1}^r \cdot \vec{f_2}^s$, with $r, s \xleftarrow{R} \mathbb{Z}_p^*$ using a CRS comprising vectors $\vec{\varphi}, \vec{f_1}, \vec{f_2}$. In the soundness setting, $\vec{\varphi}, \vec{f_1}, \vec{f_2}$ are linearly independent vectors (typically, one chooses

$$\vec{\varphi} = \vec{f_3} \cdot (1,1,g)$$ where $$\vec{f_3} = \vec{f_1}^{\xi_1} \cdot \vec{f_2}^{\xi_2})$$ whereas, in the WI setting, choosing $$\vec{\varphi} = \vec{f_1}^{\xi_1} \cdot \vec{f_2}^{\xi_2}$$ gives a perfectly hiding commitment since $\vec{C}$ is always a BBS encryption of $1_G$. On a perfectly sound CRS (where $$\vec{f_3} = \vec{f_1}^{\xi_1} \cdot \vec{f_2}^{\xi_2} \text{ and } \vec{\varphi} = \vec{f_3} \cdot (1,1,g)),$$ commitments to exponents are not fully extractable since the trapdoor $(\alpha_1, \alpha_2)$ only allows recovering $g^x$ from $$\vec{C} = \vec{\varphi}^x \cdot \vec{g_1}^r \cdot \vec{g_2}^s.$$

To provide evidence that committed group elements satisfy a set of relations, the prover computes one commitment per variable and one proof element per relation. Such efficient NIWI proofs are available for pairing-product equations, which are relations of the type

$$\prod_{i=1}^{n} e(A_i, \chi_i) \cdot \prod_{i=1}^{n} \prod_{j=1}^{n} e(\chi_i, \chi_j)^{a_{i,j}} = t_T$$

for variables $\chi_1, ..., \chi_n \in G$ and constants $t_T \in G_T$, $A_1, ..., A_n \in G$, $a_{i,j} \in Z_p$, for $i,j \in \{1,...,n\}$.

In pairing-product equations, proofs for quadratic equations require 9 group elements whereas linear equations (i.e., where $a_{i,j} = 0$ for all $i,j$ in the equation only cost 3 group elements each.

Efficient NIWI proofs also exist for multi-exponentiation equations which are equations of the form

$$\prod_{i=1}^{m} A_i^{y_i} \cdot \prod_{j=1}^{n} \chi_j^{b_j} \cdot \prod_{i=1}^{m} \prod_{j=1}^{n} \chi_j^{y_i \gamma_{ij}} = T$$

for variables $\chi_1,...,\chi_n \in G$, $y_1, ..., y_m \in Z_p$ and constants $T, A_1, ..., A_m \in G$, $b_1, ..., b_n \in Z_p$, and $\gamma_{ij} \in G$, for $i \in \{1, ..., m\}$, $j \in \{1, ..., n\}$.

Multi-exponentiation equations admit non-interactive zero-knowledge (NIZK) proofs, i.e. proofs that can be perfectly simulated (using a simulation trapdoor) without knowing the witnesses on a simulated CRS.

For linear equations (i.e., when $\gamma_{ij} = 0$ for all $i,j$), the size of the proofs depends on the form of the considered equation. Namely, linear multi-exponentiation equations of the type $\prod_{j=1}^{n} \chi_j^{b_j} = T$ (resp. $\prod_{i=1}^{m} A_i^{y_i} = T$) demand 3 (resp. 2) group elements.

Kiltz's cryptosystem

Kiltz has described a chosen-ciphertext-secure public-key encryption scheme based on the DLIN assumption [see E. Kiltz. Chosen-ciphertext security from tag-based encryption. In TCC'06, Lecture Notes in Computer Science 3876, pp. 581-600, 2006.]. The public key is $(X,Y,U,V) = (g^{\beta x}, g^{\beta y}, g^{\beta u}, g^{\beta v})$ if $g \in G$ is part of the public parameters. To encrypt $m \in G$, the sender generates a one-time signature key $R$ pair (SK, VK) $\leftarrow g(\lambda)$, picks $z_1, z_1, z_2 \xleftarrow{R} \mathbb{Z}_p^*$ and computes $\psi = (VK, \Psi_1, \Psi_2, \Psi_3, \Psi_4, \Psi_5, \sigma) = (VK, X^{z_1}, Y^{z_2}, (g^{VK \cdot} U)^{z_1}, (g^{VK \cdot} V)^{z_2}, m \cdot g^{z_1+z_2}, \sigma)$ where $\sigma$ is a signature of $(\Psi_1, \Psi_2, \Psi_3, \Psi_4, \Psi_5)$. To decrypt $\psi$, the receiver first checks that $\Psi_3 = \Psi_1^{(VK+\beta u)/\beta x}$, $\Psi_4 = \Psi_2^{(VK+\beta v)/\beta y}$ and that $\sigma$ is a valid one-time signature on the message $(\Psi_1, \Psi_2, \Psi_3, \Psi_4, \Psi_5)$. If so, the receiver outputs the plaintext $m = \Psi_5/(\Psi_1^{1/\beta x} \Psi_2^{1/\beta y})$.

It will be appreciated that there is a need for a more efficient scheme than the ones in the prior art. The present invention provides such a scheme.

SUMMARY OF INVENTION

In a first aspect, the invention is directed to a method of generating a group signature on a message. A processor generates a two-level signature on an identity of the group member at the first level and the message at the second level; generates a commitment to the identity of the group member, commitments to group elements which form a certificate for the identity and a proof that the identity and the group elements satisfy a predetermined equation; encodes the identity of the group member in the group signature in a bit-wise manner using an identity-based encryption scheme where the message serves as the identity of the identity-based encryption scheme to produce a ciphertext; generates a first proof that the ciphertext encrypts the identity of the group member; generates a second proof that the encoded identity is an identity of a group member in the certificate signed by a group manager and that the certificate was used to generate the signature on the message at the second level; and outputs the group signature comprising the two-level signature, the commitments, the encoded identity of the group member and the proofs.

In a first embodiment, the processor further generates a further signature on the two-level signature, the commitments, the encoded identity of the group member and the proofs using a one-time signature key; and the group signature further comprises the further signature. It is advantageous that the processor further generates, using a private key of the group member, a one-time signature key pair comprising the one-time signature key.

In a second aspect, the invention is directed to a device for generating a group signature on a message. The device comprises a processor configured to: generate a two-level signature on an identity of the group member at the first level and the message at the second level; generate a commitment to the identity of the group member, commitments to group elements which form a certificate for the identity and a proof that the identity and the group elements satisfy a predetermined equation; encode the identity of the group member in the group signature in a bit-wise manner using an identity-based encryption scheme where the message serves as the identity of the identity-based encryption scheme to produce a ciphertext; generate a first proof that the ciphertext encrypts the identity of the group member; generate a second proof that the encoded identity is an identity of a group member in the certificate signed by a group manager and that the certificate was used to generate the signature on the message at the second level; and output the group signature comprising the two-level signature, the commitments, the encoded identity of the group member and the proofs.

In a first embodiment, the processor is further configured to generate a further signature on the two-level signature, the commitments, the encoded identity of the group member and the proofs using a one-time signature key; and the group signature further comprises the further signature. It is advantageous that the processor is further configured to generate, using a private key of the group member, a one-time signature key pair comprising the one-time signature key.

In a third aspect, the invention is directed to a method of verifying a group signature on a message, the group signature comprising a two-level signature on an identity of a group member at the first level and the message at the second level, a commitment to the identity, commitments to group elements which form a certificate for the identity, a ciphertext comprising an encoded identity of the group member, a proof that the identity and the group elements satisfy a predetermined equation, a proof that the ciphertext encrypts the identity of the group member, a proof that the encoded identity is an identity of a group member in the certificate signed by a group manager and that the certificate was used to generate the signature on the message at the second level. A processor verifies that the ciphertext is a valid ciphertext, that the commitments verify properly and that the proofs verify properly; and validates the group signature upon successful verifications.

In a first embodiment, the group signature further comprises a further signature on the two-level signature, the commitment to the identity, the commitments to the group elements, the ciphertext, the proof that the identity and the group elements satisfy the predetermined equation, the proof that the ciphertext encrypts the identity of the group member, the proof that the encoded identity is an identity of a group member in the certificate and that the certificate was used to generate the signature on the message at the second level. The processor further verifies the further signature and validates the group signature upon successful verification of the further signature.

In a fourth aspect, the invention is directed to a device for verifying a group signature on a message, the group signature comprising a two-level signature on an identity of a group member at the first level and the message at the second level, a commitment to the identity, commitments to group elements which form a certificate for the identity, a ciphertext comprising an encoded identity of the group member, a proof that the identity and the group elements satisfy a predetermined equation, a proof that the ciphertext encrypts the identity of the group member, a proof that the encoded identity is an identity of a group member in the certificate signed by a group manager and that the certificate was used to generate the signature on the message at the second level. The device comprises a processor configured to: verify that the ciphertext is a valid ciphertext, that the commitments verify properly and that the proofs verify properly; and validate the group signature upon successful verifications.

In a first embodiment, the group signature further comprises a further signature on the two-level signature, the commitment to the identity, the commitments to the group elements, the ciphertext, the proof that the identity and the group elements satisfy the predetermined equation, the proof that the ciphertext encrypts the identity of the group member, the proof that the encoded identity is an identity of a group member in the certificate and that the certificate was used to generate the signature on the message at the second level; and the processor is further configured to verify the further signature and to validate the group signature upon successful verification of the further signature.

In a fifth aspect, the invention is directed to a non-transitory computer program product having stored thereon instructions that, when executed by a processor, perform the method of the first aspect.

In a sixth aspect, the invention is directed to a non-transitory computer program product having stored thereon instructions that, when executed by a processor, perform the method of the third aspect.

BRIEF DESCRIPTION OF DRAWINGS

Preferred features of the present invention will now be described, by way of non-limiting example, with reference to the accompanying drawings, in which:

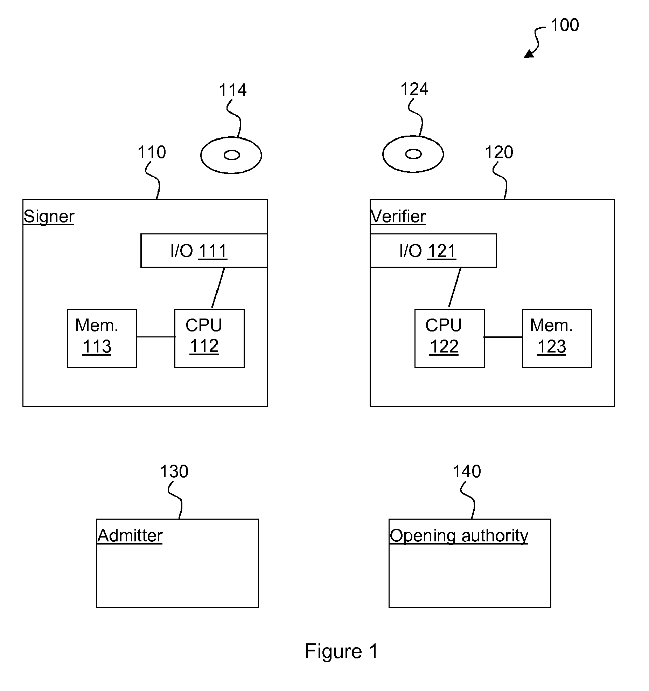

Figure 1 illustrates a group signature system according to a preferred embodiment of the invention.

DESCRIPTION OF EMBODIMENTS

The present invention is directed to a group signature scheme with message-dependent opening and logarithmic-size signature.

The present invention uses a different approach than Sakai et al.. Instead of encrypting two random session keys which are used to conceal the group member's credential, the method of the present invention directly encrypts the bits of the group member's identity as if it were the session key $K$ in the structure-preserving IBE scheme described hereinafter. This allows reducing the number of bit-carrying IBE ciphertext components from $O(\lambda)$ to $O(\log N)$. In order to make sure that neither the admitter or the opening authority will be able to individually open any signature, the invention adds a second encryption layer and additionally encrypts - under the admitter's public key - the IBE ciphertext components which depend on the bits of the group member's identity.

In the present invention, each group member is assigned a $\ell$-bit identifier, where $\ell = \log N$, and obtains a Waters signature on this identifier as a private key gsk[$i$]. Then, as in the Boyen-Waters group signature [see "Compact Group Signatures Without Random Oracles" already mentioned], each member signs messages using a two-level hierarchical extension of Waters signatures at step 1 of the signing algorithm described hereinafter. The group member does not let the resulting signature appear in the clear (since this would reveal its identity) but rather generates commitments to this signature and to its identity along with non-interactive proofs that these commitments contain a valid signature on some hidden message.

In order to make the proofs that the group member has correctly encoded the bits of its identity within a set of $\ell$ IBE ciphertexts $\left\{ \left( C_{j,1}, C_{j,2}, C_{j,3}, C_{j,4} \right) \right\}_{i=1}^{\ell}$ (all of which are encrypted using the message to sign as an identity) NIZK (and not just NIWI), extra auxiliary variables (with their own commitments) are introduced and used to simulate the adversary's view in the proofs of anonymity.

In order to prevent the admitter from opening signatures without knowing the private key of the opening authority, the signer additionally encrypts each IBE ciphertext ($C_{j,1}$, $C_{j,2}$, $C_{j,3}$, $C_{j,4}$) (or, more precisely, its component $C_{j,3}$) under the public key of the opening authority using Kiltz's encryption scheme.

Preferred embodiment

**Keygen**($\lambda$,$N$): given a security parameter $\lambda \in$ N and $N = 2^{\ell}$,

1. Choose bilinear groups (G, $G_T$) of prime order p > $2^{\lambda}$ with $g \xleftarrow{R} \mathbb{G}$.

2. As a Common Reference String for the Groth-Sahai NIWI proof system (already described), select vectors $\mathbf{f} = \left( \overrightarrow{f_1}, \overrightarrow{f_2}, \overrightarrow{f_3} \right)$ such that $\overrightarrow{f_1} = (f_1, 1, g) \in \mathbb{G}^3$, $\overrightarrow{f_2} = (1, f_2, g) \in \mathbb{G}^3$ and $\overrightarrow{f_3} = \overrightarrow{f_1}^{\xi_1} \cdot \overrightarrow{f_2}^{\xi_2}$, where $f_1 = g^{\beta_1}, f_2 = g^{\beta_2} \xleftarrow{R} \mathbb{G}$ and $\beta_1, \beta_2, \xi_1, \xi_2 \xleftarrow{R} \mathbb{Z}_p^*$. In addition, $\overrightarrow{\varphi} = \overrightarrow{f_3} \cdot (1,1,g)$.

3. Generate a master key pair (mskIBE, mpkIBE) for the IBE scheme described hereinafter. These consist of $\mathrm{msk}_{\mathrm{IBE}} = \left( g_2^{\alpha_0}, g_2^{\alpha_1} \right)$ and $\mathrm{mpk}_{\mathrm{IBE}} = \left( g_0 = g^{\alpha_0}, g_1 = g^{\alpha_1}, g_2, \{u_i\}_{i=0}^{L} \right)$, where $L \in$ poly($\lambda$) denotes the length of (hashed) messages to be signed. For a message $M \in \{0,1\}^L$, the function $H_U(M) \in$ G is defined as

$$H_U(M) = u_0 \cdot \prod_{i=1}^{L} u_i^{M[i]}$$

where M[i] ∈ {0,1} denotes the *i*-th bit of M.

4. Generate a key pair ($sk_W$, $pk_W$) for a two-level hierarchical Waters signature (described hereinbefore). At level 1 (resp. level 2), messages will be of length (resp. L). This key pair consists of $sk_W = g^\omega$ and

$$pk_W = \left( e(g,g)^\omega, \{v_i\}_{i=0}^{\ell}, \{w_i\}_{i=0}^{L} \right)$$

where $\omega \in_R Z_p$. Analogously to step 3, $H_W(M)$ denotes the function that maps the message M ∈ {0,1}$^L$ to

$H_W(M) = \omega_0 \cdot \prod_{i=0}^{L} \omega_i^{M[i]}$, where M[i] ∈ {0,1} denotes the *i*-th bit of M.

5. For each i ∈ {0, ...,*N* - 1} generate the private key gsk[*i*] of member i as a Waters signature

$$\text{gsk}[i] = \left( g^\omega \cdot \left( v_0 \cdot \prod_{j=1}^{\ell} v_j^{\text{id}_i[j]} \right)^r, g^r \right)$$

with $r \xleftarrow{R} \mathbb{Z}_p$, on the message id$_i$ = id$_i$[1] ... id$_i$[ℓ] ∈ {0,1}$^\ell$ which is obtained as the binary expansion of i ∈ {0, ..., *N* - 1}. The private key $sk_W$ is not needed beyond this point and can be erased after the generation of the vector of private keys **gsk** = (gsk[0],...,gsk[*N* -1]).

6. Choose a key pair (*X, Y, U, V*) = ($g^{\beta_x}$, $g^{\beta_y}$, $g^{\beta_u}$, $g^{\beta_v}$), with $\left( \beta_x, \beta_y, \beta_u, \beta_v \right) \xleftarrow{R} \mathbb{Z}_p$, for Kiltz's CCA2-secure encryption scheme (already described).

7. Select a strongly unforgeable one-time signature scheme $\Sigma = (\mathcal{G}, \mathcal{S}, \mathcal{V})$. Any suitable prior art one-time signature scheme provided that it is strongly unforgeable. A definition of strongly unforgeable may be found in J. H. An, Y. Dodis and T. Rabin: On the Security of Joint Signature and Encryption. Eurocrypt 2002.

The admitter's message specification key consists of msk$_{ADM}$ := msk$_{IBE}$. The private key ok of the opening authority is defined as ok := ($\beta_x$,$\beta_y$,$\beta_u$,$\beta_v$). The private key of member *i* is gsk[*i*] (as defined in step 5) while the group public key is defined to be

$$\text{gpk} := \left( (\mathbb{G}, \mathbb{G}_T), p, g, \mathbf{f} = (\overrightarrow{f_1}, \overrightarrow{f_2}, \overrightarrow{f_3}), \text{mpk}_{IBE}, pk_W, (X, Y, U, V), \Sigma \right)$$

Sign(gpk, gsk[*i*], M): to sign a message M ∈ {0,1}$^L$ using the *i*-th group member's private key $\text{gsk}[i] = (S_{i,1}, S_{i,2}) = \left( g^\omega \cdot \left( v_0 \cdot \prod_{j=1}^{\ell} v_j^{\text{id}_i[j]} \right)^r, g^r \right)$, generate a one-time signature key pair (SK, VK) ← $\Sigma \cdot g(\lambda)$ and:

1. Generate a two-level Waters signature where the message is id$_i$ ∈ {0,1}$^\ell$ at the first level and M ∈ {0,1}$^L$ at level 2. The signature comprises

$$(\Omega_1, \Omega_2, \Omega_3) = \left( S_{i,1} \cdot \left( v_0 \cdot \prod_{j=1}^{\ell} v_i^{\mathrm{id}_i[j]} \right)^{r'} \cdot H_W(M)^s, S_{i,2} \cdot g^{r'}, g^s \right)$$

$$= \left( g^\omega \cdot \left( v_{\ 0} \cdot \prod_{j=1}^{\ell} v_i^{\mathrm{id}_i[j]} \right)^{r''} \cdot H_W(M)^s, g^{r''}, g^s \right)$$

where $r''=r+r'$.

2. Generate a Groth-Sahai commitment $\vec{C}_{H_V}$ to $H_V = v_0 \cdot \prod_{j=0}^{\ell} v_{\ j}^{\mathrm{id}_i[j]}$. Then, for each $j \in \{0, ...,\ell\}$, generate a commitment $\vec{C}_{F_j}$ to the group element $F_j = g^{\mathrm{id}_i[j]}$ and generate a NIWI proof $\vec{\pi}_{H_V} \in \mathbb{G}^3$ that

$$e(H_V, g) \cdot \prod_{j=1}^{\ell} e(u_j, F_j)^{-1} = e(v_{\ 0}, g).$$

Since this is a linear equation, $\vec{\pi}_{H_V}$ only requires 3 group elements.

3. Choose $s_1, ..., s_1, ..., s_\ell \overset{R}{\leftarrow} \mathbb{Z}_p$ and $\omega_1, ..., \omega_\ell \overset{R}{\leftarrow} \mathbb{Z}_p$. For $i = 1$ to $\ell$, compute $C_{j,1} = g^{s_j}$, $C_{j,2} = H_U(M)^{s_j}$,

$$C_{j,3} = g_{\mathrm{id}_i[j]}^{s_j/\omega_j}, \quad C_{j,4} = g_2^{\omega_j}.$$

Then encrypt $C_{j,3}$ using Kiltz's encryption scheme by choosing $z_{j,1}, z_{j,2} \overset{R}{\leftarrow} \mathbb{Z}_p$ and computing

$$\Psi_j = \left( \Psi_{j,1}, \Psi_{j,2}, \Psi_{j,3}, \Psi_{j,4}, \Psi_{j,5} \right) = \left( X^{z_{j,1}}, Y^{z_{j,2}}, C_{j,3} \cdot g^{z_{j,1}+z_{j,2}}, (g^{VK} \cdot U)^{z_{j,1}}, (g^{VK} \cdot V)^{z_{j,2}} \right).$$

The next step is to prove that the ciphertexts $\{\Psi_j\}_{j=1}^{\ell}$ encrypt $\{C_{j,3}\}_{j=1}^{\ell}$ such that $\{(C_{j,1}, C_{j,2}, C_{j,3}, C_{j,4})\}_{j=1}^{\ell}$ are of the form given in this step with $\mathrm{id}_i[j] \in \{0,1\}$.

4. Generate NIZK proofs for the statements mentioned at the end of step 3 by generating commitments $\vec{C}_\theta = \vec{\varphi}^\theta \cdot \vec{f_1}^{r_\theta} \cdot \vec{f_2}^{s_\theta}$ as well as $\vec{C}_\Gamma$ and $\vec{C}_{\Gamma_2}$ to the variables $\theta = 1$, $\Gamma\ = g^\theta$, $\Gamma_2 = g_2^\theta$ and a non-interactive proof $\vec{\pi}_\Gamma$ for these five equalities, which requires 9 group elements (3 for each equation). Then, for each $j \in \{1, ...,\ell\}$, generate Groth-Sahai commitments $\vec{C}_{G_j}, \vec{C}_{\Theta G_j}, \vec{C}_{Z_{j,1}}$, and $\vec{C}_{Z_{j,2}}$, to the variables $G_j = g_1^{\mathrm{id}_i[j]} \cdot g_0^{1-\mathrm{id}_i[j]}$, $\Theta_j = g^{s_j/\omega_j}$, $Z_{j,1}\ = g^{z_{j,1}}$ and $Z_{j,2} = g^{z_{j,2}}$. Then, generate NIZK proofs $\vec{\pi}_j, \vec{\pi}_{G_j}, \vec{\pi}_{\Theta_j}, \{\vec{\pi}_{\Psi_{j,k}}\}_{k=1}^{3}$ for the following relations

$$e(F_j, F_j) = e(g, F_j)$$

$$e(G_j, g) = e(g_1, F_j) \cdot e(g_0, F_j^{-1} \cdot g)$$

$$e(\Theta_j, C_{j,4}) = e(C_{j,1}, g_2)$$

$$e\left(\Psi_{j,1}, g\right) = e\left(X, Z_{i,1}\right)$$

$$e\left(\Psi_{j,2}, g\right) = e\left(Y, Z_{i,2}\right)$$

$$e\left(\Psi_{j,3}, g\right) = e\left(\Theta_j, G_j\right) \cdot e\left(g, Z_{i,1} \cdot Z_{i,2}\right)$$

This is done by proving that

$$e\left(F_j, F_j\right) = e\left(\mathrm{g}, F_j\right)$$

$$e\left(G_j, g\right) = e\left(\mathrm{g}_1, F_j\right) \cdot e\left(\mathrm{g}_0, F_j^{-1} \cdot g\right)$$

$$e\left(\Theta_j, C_{j,4}\right) = e\left(C_{j,1}, \Gamma_2\right)$$

$$e\left(\Psi_{j,1}, \Gamma\right) = e\left(X, Z_{i,1}\right)$$

$$e\left(\Psi_{j,2}, \Gamma\right) = e\left(Y, Z_{i,2}\right)$$

$$e\left(\Psi_{j,3}, \Gamma\right) = e\left(\Theta_j, G_j\right) \cdot e\left(\Gamma, Z_{i,1} \cdot Z_{i,2}\right)$$

It should be noted that the first relation guarantees that $\mathrm{id}_j[j]$ is indeed a bit. The first and sixth relations are quadratic equations and thus require 9 elements each whereas relations 2-5 only cost 12 group elements together. It should also be noted that the same variable $\theta \in \mathbb{Z}_p$ can be reused for each $j \in \{1, ...,\ell\}$ so that the equalites of step 4 (which are guaranteed by $\vec{\pi}_\Gamma$) only need to be proved once.

6. Generate a commitment $\vec{C}_{\Omega_1}$, to $\Omega_1$ with a NIWI proof $\vec{\pi}_W \in \mathbb{G}^3$ that variables $(\Omega_1, H_U)$ satisfy the verification equation

$$e(g, \mathrm{g})^\omega \cdot e(H_W(M), \Omega_3) = e(\Omega_1, g) \cdot e(H_V, \Omega_2^{-1})$$

of the two-level Waters signature.
7. Finally, use the one-time private key SK to generate a one-time signature $\sigma_{ots}$ on the entire set of commitments and NIWI/NIZK proofs in order to achieve anonymity in the CCA2 sense.

The whole signature $\sigma$ comprises

$$\sigma = (\text{VK}, \vec{C}_{H_V}, \vec{C}_\theta, \vec{C}_\Gamma, \vec{C}_{\Gamma_2}, \vec{\pi}_{H_U}, \vec{\pi}_W, \vec{\pi}_\Gamma$$

$$\left\{ \vec{C}_{F_j}, \left( C_{j,1}, C_{j,2}, C_{j,4}, \Psi_j \right), \vec{C}_{G_j}, \vec{\pi}_{G_j}, \vec{\pi}_{\Theta_j}, \vec{C}_{\Theta_j}, \vec{C}_{Z_{j,1}}, \vec{C}_{Z_{j,2}}, \vec{\pi}_j, \left\{ \vec{\pi}_{\Psi_{j,k}} \right\}_{k=1}^3 \right\}_{j=1}^\ell, \vec{C}_{\Omega_1}, \Omega_2, \Omega_3, \sigma_{ots} )$$

Verify(gpk, $M$, $\sigma$): parse $\sigma$ as indicated. Return 1 if and only if: (i) $\sigma_{ots}$ is a valid one-time signature on the whole bundle; (ii) $\left\{ \Psi_j \right\}_{j=1}^\ell$ are all valid ciphertexts for Kiltz's cryptosystem (i.e. by testing if $e(\Psi_{j,4}, X) = e(\Psi_{j,1}, g^{\text{VK}\cdot U})$ and $e(\Psi_{j,5}, Y)$ = $e(\Psi_{j,2}, g^{\text{VK}\cdot V})$; (iii) For each $j \in \{1,...,\ell\}$, $(C_{j,1}, C_{j,2})$ satisfies $e(C_{j,1}, H_U(M)) = e(g, C_{j,2})$; (iv) All proofs properly verify.

Trapgen(gpk, msk$_{\text{ADM}}$, M): given the admitter's key msk$_{\text{ADM}}$ and a message M $\in \{0,1\}^L$, compute and return

$$t_M = \left( t_{0,1}, t_{0,2}, t_{1,1}, t_{1,2} \right) = \left( g_2^{\alpha_0} \cdot H_U(M)^{r_0}, g^{r_0}, g_2^{\alpha_1} \cdot H_U(M)^{r_1}, g^{r_1} \right)$$

where $r_0, r_1 \xleftarrow{R} \mathbb{Z}_p$.

Open(gpk, M, $\sigma$, $t_M$, ok): return $\perp$ if $\sigma$ is not a valid signature with regard to gpk and M. Otherwise, parse $t_M$ as in described in **Trapgen.** For i = 1 to $\ell$:

    1. Decrypt $\Psi_j = (\Psi_{j,1}, \Psi_{j,2}, \Psi_{j,3}, \Psi_{j,4}, \Psi_{j,5})$ using ok = $(\beta_x, \beta_y, \beta_u, \beta_v)$ to obtain $C_{j,3} \in \mathbb{G}$.

    2. Use $t_M$ to determine the bit id[$i$] $\in \{0,1\}$ for which the equalities $C_{j,1}, C_{j,2}, C_{j,3}, C_{j,4}$ (see Sign, step 3) are satisfied.

Return the identifier id = id[1] ...id[$\ell$] $\in \{0,1\}^\ell$.

Overall, each signature comprises 53$\ell$+35 group elements if the scheme is instantiated with Groth's one-time signature [see "Simulation-Sound NIZK Proofs for a Practical Language and Constant Size Group Signatures"].

From a security point of view, the traceability property of the scheme relies on the standard Computational Diffie-Hellman (CDH) assumption whereas the anonymity against the opening authority relies on the Decision 3-party Diffie-Hellman (C3DH) and the anonymity against the admitter relies on the Decision Linear Problem (DLIN) assumption. In the proof of anonymity against the admitter, it is also needed to assume that the one-time signature is strongly unforgeable (i.e. it should be unfeasible to publicly compute a new signature on a previously signed message).

Figure 1 illustrates a group signature system 100 according to a preferred embodiment of the present invention. For ease of illustration and comprehension, the connections between the devices in the system have been omitted.

The system 100 comprises a signer 110 and a verifier 120, each comprising at least one interface unit 111, 121 configured for communication with the other device, at least one processor ("processor") 112, 122 and at least one memory 113, 123 configured for storing data, such as accumulators and intermediary calculation results. The system 100 further comprises an admitter 130 and an opening authority; although not illustrated for the sake of clarity, each of these devices comprises the necessary hardware such as processors and memory.

The processor 112 of the signer 110 is configured to perform the Sign part of the present group signature scheme, and the processor 122 of the verifier 120 is adapted to verify a received group signature, i.e. perform Verify. The admitter 130 is configured to perform the TrapGen part. The opening authority 140 is configured to perform the Open part. A first non-transitory computer program product 114 such as a CD-ROM or a DVD comprises stored instructions that, when executed by the processor 112 of the sender 110, performs the Sign parts according to the invention. A non-transitory second computer program product 124 comprises stored instructions that, when executed by the processor 122 of the receiver 120, performs Verify according to the invention.

A structure-preserving IBE scheme

**Setup**($\lambda$): Choose bilinear groups $\left( \mathbb{G}, \mathbb{G}_T \right)$ of prime order $p > 2^\lambda$. Then:

*R R R*

1. Choose $\alpha_0$, $\alpha_0, \alpha_1 \xleftarrow{R} \mathbb{Z}_p$, $g \xleftarrow{R} \mathbb{G}$, $g_2 \xleftarrow{R} \mathbb{G}$ and set $g_0 = g^{\alpha_0}$, $g_1 = g^{\alpha_1}$.

2. Choose $u_0, u_1, \ldots, u_L \xleftarrow{R} \mathbb{G}$ for some $L \in \text{poly}(\lambda)$. These are used to implement a number-theoretic hash function $H_\mathbb{G}$: $\{0,1\}^L \to G$ that maps any $L$-bit string $\tau = \tau[1] \ldots \tau[L] \in \{0,1\}^L$ to and $H_\mathbb{G}(\tau) = u_0 \cdot \prod_{i=1}^{L} u_i^{\tau[i]}$.

3. Choose group elements $(Z_1, \ldots, Z_\ell) \xleftarrow{R} \mathbb{G}^\ell$, where $\ell = 2 \log_2(p) > 2\lambda$.

The master public key mpk is defined as

$$\text{mpk} = \left( (\mathbb{G}, \mathbb{G}_T), p, g, g_0 = g^{\alpha_0}, g_1 = g^{\alpha_1}, g_2, \{u_i\}_{i=0}^L, \{Z_i\}_{i=0}^\ell \right)$$

and the master secret key msk is $\text{msk} := \left( g_2^{\alpha_0}, g_2^{\alpha_1} \right)$.

**Keygen**(msk, ID): given the master secret key $\text{msk} = \left( g_2^{\alpha_0}, g_2^{\alpha_1} \right)$ and an identity ID $\in \{0,1\}^L$, compute and return

$$d_{\text{ID}} = \left( d_{0,1}, d_{0,2}, d_{1,1}, d_{1,2} \right) = \left( g_2^{\alpha_0} \cdot H_\mathbb{G}(\text{ID})^{r_0}, g^{r_0}, g_2^{\alpha_1} \cdot H_\mathbb{G}(\text{ID})^{r_1}, g^{r_1} \right)$$

where $r_0, r_1 \xleftarrow{R} \mathbb{Z}_p$.

**Encrypt**(mpk, ID, $M$): to encrypt a message M $\in$ G:

1. Choose $K \xleftarrow{R} \{0,1\}^\ell$, where $\ell = 2 \log_2(p)$.

2. Choose $s_1, \ldots, s_\ell \xleftarrow{R} \mathbb{Z}_p$ and $\omega_1, \ldots, \omega_\ell \xleftarrow{R} \mathbb{Z}_p$.

3. Parse K as $K[1], \ldots K[\ell] \in \{0,1\}^\ell$. For $i = 1$ to $\ell$, compute

$$C_{i,1} = g^{s_i}, \qquad C_{i,2} = H_\mathbb{G}(\text{ID})^{s_i}, \qquad C_{i,3} = g_{K[i]}^{s_i/\omega_i}, \qquad C_{i,4} = g_2^{\omega_i}.$$

4. Compute $C_0 = M \cdot \prod_{i=1}^{\ell} Z_i^{K[i]}$.

Return the ciphertext $C = \left( C_0, \{C_{i,1}, C_{i,2}, C_{i,3}, C_{i,4}\}_{i=1}^{\ell} \right) \in \mathbb{G}^{4\ell+1}$.

Decrypt(mpk, $d_{\text{ID}}$, $C$): parse the ciphertext C as $C = \left( C_0, \{C_{i,1}, C_{i,2}, C_{i,3}, C_{i,4}\}_{i=1}^{\ell} \right)$ and

1. For $i = 1$ to $\ell$, compute $\mu_b = e(C_{i,1}, d_{b,1})/e(C_{i,2}, d_{b,2})$ for each $b \in \{0,1\}$. If $\mu_b = e(C_{i,3}, C_{i,4})$ for some $b \in \{0,1\}$, set $K[i] = b$. Otherwise, return $\perp$.

2. Compute and return $M = C_0 / \left( \prod_{i=1}^{\ell} Z_i^{K[i]} \right)$.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A method of generating a group signature on a message, the method comprising the steps, at a device (110) comprising a processor (112), of:

   - generating a two-level signature on an identity of the group member at the first level and the message at the second level;
   - generating a commitment to the identity of the group member, commitments to group elements which form a certificate for the identity and a proof that the identity and the group elements satisfy a predetermined equation;
   - encoding the identity of the group member in the group signature in a bit-wise manner using an identity-based encryption scheme where the message serves as the identity of the identity-based encryption scheme to produce a ciphertext;
   - generating a first proof that the ciphertext encrypts the identity of the group member;
   - generating a second proof that the encoded identity is an identity of a group member in the certificate signed by a group manager and that the certificate was used to generate the signature on the message at the second level; and
   - outputting the group signature comprising the two-level signature, the commitments, the encoded identity of the group member and the proofs.

2. The method of claim 1, further comprising the step of generating a further signature on the two-level signature, the commitments, the encoded identity of the group member and the proofs using a one-time signature key; wherein the group signature further comprises the further signature.

3. The method of claim 2, further comprising the step of generating, using a private key of the group member, a one-time signature key pair comprising the one-time signature key.

4. A device (110) for generating a group signature on a message, the device (110) comprising a processor (112) configured to:

   - generate a two-level signature on an identity of the group member at the first level and the message at the second level;
   - generate a commitment to the identity of the group member, commitments to group elements which form a certificate for the identity and a proof that the identity and the group elements satisfy a predetermined equation;
   - encode the identity of the group member in the group signature in a bit-wise manner using an identity-based encryption scheme where the message serves as the identity of the identity-based encryption scheme to produce a ciphertext;
   - generate a first proof that the ciphertext encrypts the identity of the group member;
   - generate a second proof that the encoded identity is an identity of a group member in the certificate signed by a group manager and that the certificate was used to generate the signature on the message at the second level; and
   - output the group signature comprising the two-level signature, the commitments, the encoded identity of the group member and the proofs.

5. The device of claim 4, wherein the processor is further configured to generate a further signature on the two-level signature, the commitments, the encoded identity of the group member and the proofs using a one-time signature key; wherein the group signature further comprises the further signature.

6. The device of claim 5, wherein the processor is further configured to generate, using a private key of the group member, a one-time signature key pair comprising the one-time signature key.

7. A method of verifying a group signature on a message, the group signature comprising a two-level signature on an identity of a group member at the first level and the message at the second level, a commitment to the identity, commitments to group elements which form a certificate for the identity, a ciphertext comprising an encoded identity of the group member, a proof that the identity and the group elements satisfy a predetermined equation, a proof that the ciphertext encrypts the identity of the group member, a proof that the encoded identity is an identity of a group member in the certificate signed by a group manager and that the certificate was used to generate the signature on the message at the second level, the method comprising the steps in a processor (122) of a verification device (120) of:

- verifying that the ciphertext is a valid ciphertext;
- verifying that the commitments verify properly;
- verifying that the proofs verify properly; and
- validating the group signature upon successful verifications.

8. The method of claim 7, wherein the group signature further comprises a further signature on the two-level signature, the commitment to the identity, the commitments to the group elements, the ciphertext, the proof that the identity and the group elements satisfy the predetermined equation, the proof that the ciphertext encrypts the identity of the group member, the proof that the encoded identity is an identity of a group member in the certificate and that the certificate was used to generate the signature on the message at the second level; wherein the method further comprises the step of verifying the further signature; wherein the group signature is validated upon successful verification of the further signature.

9. A device (120) for verifying a group signature on a message, the group signature comprising a two-level signature on an identity of a group member at the first level and the message at the second level, a commitment to the identity, commitments to group elements which form a certificate for the identity, a ciphertext comprising an encoded identity of the group member, a proof that the identity and the group elements satisfy a predetermined equation, a proof that the ciphertext encrypts the identity of the group member, a proof that the encoded identity is an identity of a group member in the certificate signed by a group manager and that the certificate was used to generate the signature on the message at the second level, the device comprising a processor (122) configured to:

- verify that the ciphertext is a valid ciphertext;
- verify that the commitments verify properly;
- verify that the proofs verify properly; and
- validate the group signature upon successful verifications.

10. The device of claim 9, wherein the group signature further comprises a further signature on the two-level signature, the commitment to the identity, the commitments to the group elements, the ciphertext, the proof that the identity and the group elements satisfy the predetermined equation, the proof that the ciphertext encrypts the identity of the group member, the proof that the encoded identity is an identity of a group member in the certificate and that the certificate was used to generate the signature on the message at the second level; wherein the processor is further configured to verify the further signature and to validate the group signature upon successful verification of the further signature.

11. A non-transitory computer program product (114) having stored thereon instructions that, when executed by a processor, perform the method of any one of claims 1 to 3.

12. A non-transitory computer program product (124) having stored thereon instructions that, when executed by a processor, perform the method of any one of claims 7 to 8.

100

114

124

110

120

Signer

I/O 111

Mem.
113

CPU
112

Verifier

I/O 121

CPU
122

Mem.
123

130

140

Admitter

Opening authority

Figure 1

Europäisches Patentamt

European Patent Office

Office européen des brevets

# EUROPEAN SEARCH REPORT

Application Number

EP 13 30 6217

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | YUSUKE SAKAI ET AL: "Group Signatures with Message-Dependent Opening", 16 May 2012 (2012-05-16), PAIRING-BASED CRYPTOGRAPHY PAIRING 2012, SPRINGER BERLIN HEIDELBERG, BERLIN, HEIDELBERG, PAGE(S) 270 - 294, XP047022552, ISBN: 978-3-642-36333-7 * abstract * * paragraphs [0001], [0002] * * paragraph [0004] - paragraph [0007] * | 1-12 | INV. H04L9/08 H04L9/30 H04L9/32 |
| A | Kazuma Ohara ET AL: "A Group Signature Scheme with Unbounded Message-Dependent Opening Goichiro Hanaoka", ASIA CCS '13 Proceedings of the 8th ACM SIGSAC symposium on Information, computer and communications security, 8 May 2013 (2013-05-08), pages 517-522, XP055106675, Hangzhou, China DOI: 10.1145/2484313.2484382 ISBN: 978-1-45-031767-2 Retrieved from the Internet: URL:http://dl.acm.org/ft_gateway.cfm?id=2484382&ftid=1370444&dwn=1&CFID=419787910&CFTOKEN=51600765 [retrieved on 2014-03-11] * the whole document * | 1-12 | |

TECHNICAL FIELDS SEARCHED (IPC)

H04L

-/--

The present search report has been drawn up for all claims

| Place of search | Date of completion of the search | Examiner |
|---|---|---|
| Munich | 13 March 2014 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 30 6217

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GEORG FUCHSBAUER: "Automorphic Signatures in Bilinear Groups and an Application to Round-Optimal Blind Signatures", INTERNATIONAL ASSOCIATION FOR CRYPTOLOGIC RESEARCH,, vol. 20100317:094214, 17 March 2010 (2010-03-17), pages 1-26, XP061003755, [retrieved on 2010-03-17] * paragraph [0003] * | 1-12 | |
| A | EIKE KILTZ ET AL: "CCA2 Secure IBE: Standard Model Efficiency through Authenticated Symmetric Encryption", INTERNATIONAL ASSOCIATION FOR CRYPTOLOGIC RESEARCH,, vol. 20080623:162600, 18 January 2008 (2008-01-18), pages 1-25, XP061002717, [retrieved on 2008-01-18] * paragraphs [0004], [0005] * | 1-12 | TECHNICAL FIELDS SEARCHED (IPC) |
| A | NUTTAPONG ATTRAPADUNG ET AL: "Computing on Authenticated Data: New Privacy Definitions and Constructions", 2 December 2012 (2012-12-02), ADVANCES IN CRYPTOLOGY ASIACRYPT 2012, SPRINGER BERLIN HEIDELBERG, BERLIN, HEIDELBERG, PAGE(S) 367 - 385, XP047011248, ISBN: 978-3-642-34960-7 * paragraph [0002] - paragraph [0004] * | 1-12 | |

-/--

The present search report has been drawn up for all claims

| Place of search | Date of completion of the search | Examiner |
|---|---|---|
| Munich | 13 March 2014 | Bec, Thierry |

EPO FORM 1503 03.82 (P04C01)

Europäisches
Patentamt

European
Patent Office

Office européen
des brevets

## EUROPEAN SEARCH REPORT

Application Number

EP 13 30 6217

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Masayuki Abe ET AL: "Separating Short Structure-Preserving Signatures from Non-interactive Assumptions" In: "Field Programmable Logic and Application", 1 January 2011 (2011-01-01), Springer Berlin Heidelberg, Berlin, Heidelberg, XP055080429, ISSN: 0302-9743 ISBN: 978-3-54-045234-8 vol. 7073, pages 628-646, DOI: 10.1007/978-3-642-25385-0_34, * paragraph [0002] - paragraph [0003] * ----- | 1-12 | |
| A | Marc Fischlin ET AL: "Non-interactive and Re-usable Universally Composable String Commitments with Adaptive Security" In: "Field Programmable Logic and Application", 1 January 2011 (2011-01-01), Springer Berlin Heidelberg, Berlin, Heidelberg, XP055080428, ISSN: 0302-9743 ISBN: 978-3-54-045234-8 vol. 7073, pages 468-485, DOI: 10.1007/978-3-642-25385-0_25, * paragraph [0003] - paragraph [0004] * ----- | 1-12 | TECHNICAL FIELDS SEARCHED (IPC) |

The present search report has been drawn up for all claims

| Place of search | Date of completion of the search | Examiner |
|---|---|---|
| Munich | 13 March 2014 | Bec, Thierry |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Group Signatures with Message-Dependent Opening. **Y. SAKAI ; K. EMURA ; G. HANAOKA ; Y. KAWAI ; T. MATSUDA ; K. OMOTE.** 5th International Conference on Pairing-Based Cryptography (Pairing 2012), Lecture Notes on Computer Science series. Springer, 2013
- **M. BELLARE ; D. MICCIANCIO ; B. WARINSCHI.** Foundations of group signatures: Formal definitions, simplified requirements, and a construction based on general assumptions. *Eurocrypt'03, Lecture Notes on Computer Science,* 2003, vol. 2656, 614-629
- **G. ATENIESE ; J. CAMENISCH ; M. JOYE ; G. TSUDIK.** A practical and provably secure coalition-resistant group signature scheme. *Crypto'00, Lecture Notes in Computer Science,* 2000, vol. 1880, 255-270
- Short Group Signatures. **D. BONEH ; X. BOYEN ; H. SHACHAM.** Crypto'04, Lecture Notes in Computer Science. Springer, 2004, vol. 3152, 41-55
- **M. BELLARE ; D. MICCIANCIO ; B. WARINSCHI.** Foundations of group signatures: Formal definitions, simplified requirements, and a construction based on general assumptions. *Eurocrypt'03, Lecture Notes in Computer Science,* 2003, vol. 2656, 614-629
- **M. BELLARE ; H. SHI ; C. ZHANG.** Foundations of group signatures: The case of dynamic groups. *CT-RSA'05, Lecture Notes in Computer Science,* 2005, vol. 3376, 136-153
- **A. KIAYIAS ; M. YUNG.** Secure scalable group signature with dynamic joins and separable authorities. *International Journal of Security and Networks (IJSN),* 2006, vol. 1 (1/2), 24-45
- **G. ATENIESE ; J. CAMENISCH ; S. HOHENBERGER ; B. DE MEDEIROS.** Practical group signatures without random oracles. *Cryptology ePrint Archive: Report 2005/385,* 2005
- Compact Group Signatures Without Random Oracles. **X. BOYEN ; B. WATERS.** Eurocrypt'06, Lecture Notes in Computer Science 4004. Springer, 2006, 427-444
- **X. BOYEN ; B. WATERS.** Full-Domain Subgroup Hiding and Constant-Size Group Signatures. *PKC'07, Lecture Notes in Computer Science,* 2007, vol. 4450, 1-15
- Simulation-Sound NIZK Proofs for a Practical Language and Constant Size Group Signatures. **J. GROTH.** Asiacrypt'06, Lecture Notes in Computer Science. Springer, 2006, vol. 4284, 444-459
- Fully anonymous group signatures without random oracles. **J. GROTH.** Asiacrypt 2007, Lecture Notes in Computer Science. Springer, 2007, vol. 4833, 164-180
- **S.-H. HENG ; K. KUROSAWA.** k-Resilient Identity-Based Encryption in the Standard Model. *CT-RSA'04, Lecture Notes in Computer Science,* 2004, vol. 2964, 67-80
- **A. SHAMIR.** Identity-Based Cryptosystems and Signature Schemes. *Crypto'84, Lecture Notes on Computer Science,* 1984, vol. 196, 47-53
- **D. BONEH ; M. FRANKLIN.** Identity-Based Encryption from the Weil Pairing. *SIAM Journal of Computing,* 2003, vol. 32 (3), 586-615
- *Crypto'01, Lecture Notes on Computer Science,* 2001, vol. 2139, 213-229
- **B. WATERS.** Efficient Identity-Based Encryption Without Random Oracles. *Eurocrypt'05, Lecture Notes on Computer Science,* 2005, vol. 3494, 114-127
- **J. GROTH ; A. SAHAI.** Efficient non-interactive proof systems for bilinear groups. *Eurocrypt'08, Lecture Notes in Computer Science,* 2008, vol. 4965, 415-432
- Short Group Signatures. **D. BONEH ; X. BOYEN ; H. SHACHAM.** rypto'04, Lecture Notes in Computer Science. Springer, 2004, vol. 3152, 41-55
- **E. KILTZ.** Chosen-ciphertext security from tag-based encryption. *TCC'06, Lecture Notes in Computer Science,* 2006, vol. 3876, 581-600
- **J. H. AN ; Y. DODIS ; T. RABIN.** On the Security of Joint Signature and Encryption. *Eurocrypt,* 2002